# EUROPÄISCHE PATENTSCHRIFT

(11) **EP 0 784 212 B1**
(45) Veröffentlichungstag und Bekanntmachung des Hinweises auf die Patenterteilung: **16.04.2003**
(21) Anmeldenummer: 97100183.9
(22) Anmeldetag: 08.01.1997
(51) Int. Cl.: G01S 7/292

(54) **Verfahren zur Erzeugung einer Clutter-Schwelle und Anordnungen zur Durchführung des Verfahrens**
Method and system for producing a clutter threshold
Procédé et système pour produire un seuil à fouillis

(30) Priorität: 11.01.1996 DE 19600779
(43) Veröffentlichungstag der Anmeldung: 16.07.1997
(73) Patentinhaber: EADS Deutschland GmbH, 81663 München (DE)
(72) Erfinder: Hofele, Franz-Xafer, 73072 Donzdorf (DE)
(74) Vertreter: Meel, Thomas

(56) Entgegenhaltungen:
- US-A- 3 778 822
- US-A- 4 044 352
- US-A- 4 542 381
- AL-HUSSAINI, EMAD: "Performance of the Greater-of and censored Greater-of Detectors in Multiple Target Environments" I.E.E PROCEEDINGS-F/COMMUNICATIONS, RADAR & SIGNAL PROCESSING, Bd. 135, Nr. 3, Juni 1988, Seiten 193-189, XP002090618

## Beschreibung

Die Erfindung betrifft ein Verfahren zur Erzeugung einer Clutter-Schwelle nach dem Oberbegriff der Patentansprüche 1 und 5 sowie eine Anordnung zur Durchführung des Verfahrens nach dem Oberbegriff des Patentanspruchs 4.

Die Erfindung ist insbesondere in der Radartechnologie anwendbar. Dabei werden die empfangenen Echosignale, die sowohl Ziel- als auch Clutterechos enthalten, zunächst in den Videobereich umgesetzt (gemischt) und digitalisiert. Das Videosignal, das beispielsweise eine Bandbreite bis zu ungefähr 20 MHz besitzen kann, liegt also in Form einer Folge von Abtastwerten vor, die von einem Analog/Digital-Wandler erzeugt werden. Zur Detektion eines (Radar-)Zieles wird im allgemeinen eine Clutter-Schwelle verwendet. Diese ist ein (Betrags-)Schwellwert für das (Betrags-)Videosignal. Für die Detektion eines Zieles werden lediglich diejenigen Abtastwerte verwendet, die größer als die Clutter-Schwelle sind. Zu deren Erzeugung werden vorzugsweise sogenannte CFAR-Schaltungen ("Constant False Alarm Rate") verwendet, da damit eine adaptive Clutter-Schwelle herstellbar ist. Diese ist erforderlich, wenn eine zeitliche und/oder räumliche Änderung des Clutters vorhanden ist, beispielsweise bei vom Wetter abhängigen Clutter, z.B. sich zeitlich und/oder räumlich ändernden Wolkenformationen innerhalb eines von dem Radar erfaßten Überwachungsgebiets.

Eine solche CFAR-Schaltung enthält entsprechend FIG. 3, FIG. 4 im wesentlichen Schieberegister S1, S2 mit vorgebbarer Anzahl von Speicherzellen und einem Eingang E, an welchem die Abtastwerte anliegen. Das Schieberegister besteht aus Teilregistern S1, S2, zwischen denen sich die sogenannte Zelle unter Test ZUT befindet. Ein dort vorhandener Abtastwert, auch Signal unter Test SUT genannt, wird einem Plus-Eingang + eines Komparators KO zugeführt. Dem Minus-Eingang - wird ein der Clutter-Schwelle CS entsprechendes Signal zugeführt. Das am Ausgang A des Komparators KO entstehende Ausgangssignal enthält daher lediglich Abstandswerte mit einem (Amplituden-)Betrag, der größer ist als die Clutter-Schwelle. Diese kann entsprechend FIG. 3, FIG. 4 auf unterschiedliche Weise ermittelt werden.

Entsprechend FIG. 3 sei angenommen, daß jedes der Teilregister S1, S2 aus (GL)/2 Speicherzellen besteht. Zu jedem Teilregister S1, S2 gehört eine zugehörige Summierschaltung SU1, SU2. Diesen werden gleichzeitig die in den Speicherzellen vorhandenen Abtastwerte zugeführt. In jeder Summierschaltung SU1, SU2 wird ein zugehöriges Teilsummierungssignal gebildet. Von diesen Teilsummierungssignalen wird in einem Mittelwertsbildner SG der zugehörige Mittelwert gebildet. Dieser wird in einer Teilerschaltung GL durch die Anzahl der in den Teilregistern vorhandenen Speicherzellen dividiert und anschließend in einer Multiplizierschaltung K mit einem vorgebbaren Multiplikator multipliziert. Das Ausgangssignal der Multiplizierschaltung K entspricht der Clutter-Schwelle CS. Diese entspricht also einem Mittelwert aus allen Abtastwerten, die in den Speicherzellen der Teilregister S1, S2 enthalten sind.

Das beschriebene Verfahren ist vorteilhaft verwendbar, wenn keine zeitlich und/oder räumlich abrupten Änderungen der Clutter-Verteilung zu erwarten sind. Diese ist beispielsweise bei Seecluter (Wellenbewegung des Meeres) der Fall. Denn Seeclutter hat innerhalb eines zu überwachenden Gebietes eine im wesentlichen gleichbleibende statistische Verteilung, die lediglich vom Wetter, z.B. Sturm, abhängt.

Das Verfahren liefert dagegen beispielsweise bei einem an sich wolkenlosen Himmel mit einer sich aufbauenden Gewitterfront (gut reflektierende Cumuluswolken) lediglich eine allenfalls eingeschränkt verwendbare Clutter-Schwelle. Denn ist beispielsweise in dem genannten ersten Teilgerigster S1 ein dem wolkenlosen Himmel zuzuordnender Clutter vorhanden und in der Zelle unter Test ZUT sowie dem zweiten Teilregister S2 ein der Gewitterfront zuzuordnender Clutter, so kann ein zusätzlich in der Zelle unter Test ZUT vorhandenes Zielsignal (Abtastwert) von einem zu detektienden (Radar-)Ziel allenfalls unzureichend erkannt werden, weil die Clutter-Schwelle derart sprunghaften Änderungen des Clutters aufgrund der Mittelwertbildung nicht folgen kann.

Die Anordnung der FIG. 4 unterscheidet sich von derjenigen der FIG. 3 im wesentlichen dadurch, daß statt der Mittelwertbildung eine sogenannte geordnete Statistik ("Ordered statistic") verwendet wird. Dabei werden die in den Teilregistern S1, S2 vorhandenen Abtastwerte einer Sortiervorrichtung SO zugeführt und dort entsprechend dem Betrag auf- oder absteigend sortiert. Mit einer Rangauswahl-Schaltung RA wird dann aus den sortierten Abtastwerten immer ein Abtastwert mit vorgebbarem (Betrags-)Rang ausgewählt, beispielsweise immer genau der mittlere Abstastwert, das heißt derjenige, der genau in der Mitte der (Betrags-)Rangfolge steht. Dieser ausgewählte Abtastwert wird dann in der Multiplizierschaltung K mit einem vorgebbaren Multiplikator multipliziert, so daß die Clutter-Schwelle CS entsteht.

Es ist ersichtlich, daß auch eine derart erzeugte Clutter-Schwelle den erwähnten sprunghaften Änderungen des Clutters lediglich unzureichend folgen kann, da insbesondere der erwähnte Sortiervorgang eine erhebliche Verarbeitungszeit benötigt, bezogen auf die Taktzeit, mit welcher die Abtastwerte erzeugt werden. Dieser Nachteil kann zumindest teilweise beseitigt werden durch eine sehr schnell arbeitende Sortiervorrichtung. Diese ist aber in nachteiliger Weise technisch aufwendig und daher kostenungünstig.

Der Erfindung liegt daher die Aufgabe zugrunde, gattungsgemäße Verfahren anzugeben, mit welchen in zuverlässiger und kostengünstiger Weise eine Clutter-Schwelle erzeugt wird, welche sich gut an das Clutter-Verhalten anschmiegt, insbesondere bei einer sprunghaften Änderung. Der Erfindung liegt außerdem die Aufgabe zugrunde, Anordnungen zur Durchführung der Verfahren anzugeben.

Diese Aufgabe wird gelöst durch die in den kennzeichnenden Teilen der Patentansprüche 1 sowie 4 angegebenen Merkmale.

Vorteilhafte Ausgestaltungen und/oder Weiterbildungen sind den weiteren Ansprüchen entnehmbar.

Ein erster Vorteil der Erfindung besteht darin, daß mehrere zeitlich aufeinander folgende (Ziel-)Abtastwerte, die zu einem zu detektierenden (Radar-)Ziel gehören, erkannt und ausgegeben (durchgelassen) werden.

Ein zweiter Vorteil besteht darin, daß selbst in Anwesenheit von nahezu beliebigem Clutter eine Maskierung von räumlich eng benachbarten (Radar-)Zielen vermieden wird. Es kann also ein räumlich kleines Ziel in unmittelbarer Nähe von einem großen Ziel detektiert werden.

Weitere Vorteile ergeben sich aus der nachfolgenden Beschreibung.

Die Erfindung wird im folgenden anhand von Ausführungsbeispielen unter Bezugnahme auf weitere schematisch dargestellte Figuren näher erläutert. Es zeigen

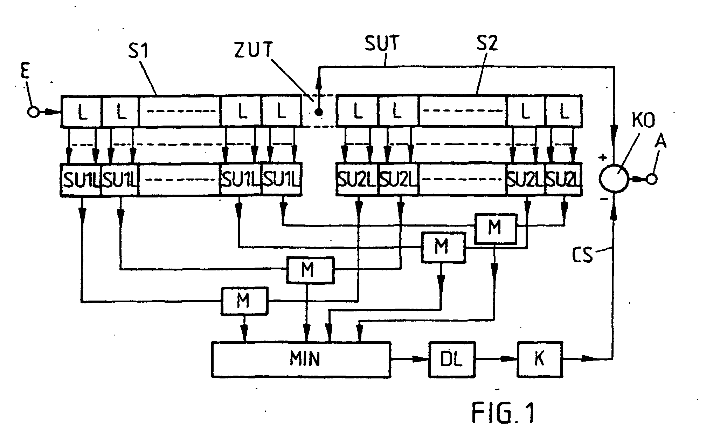

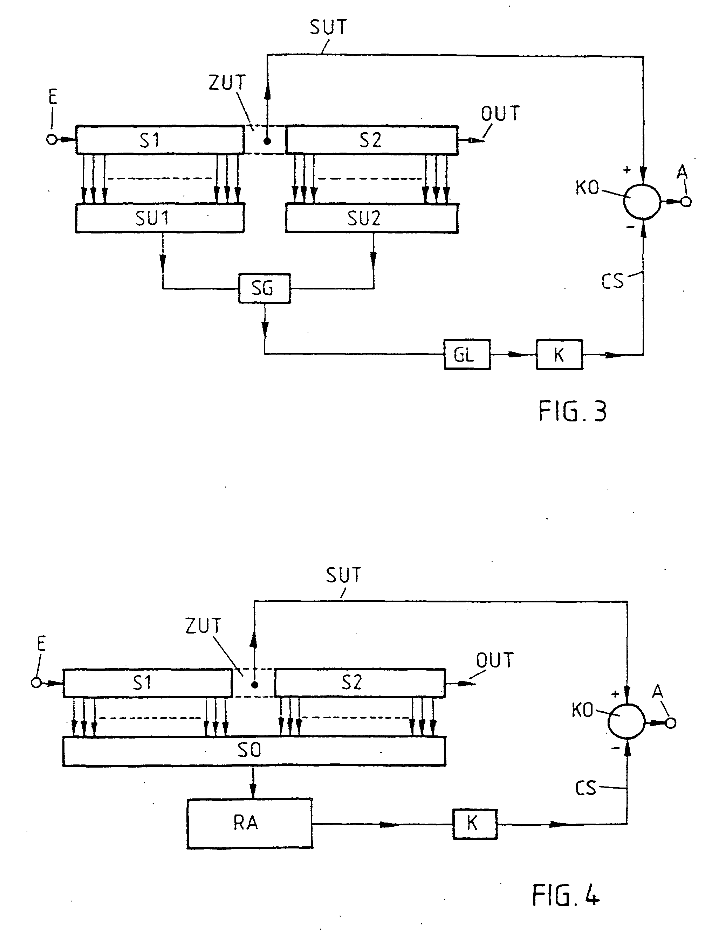

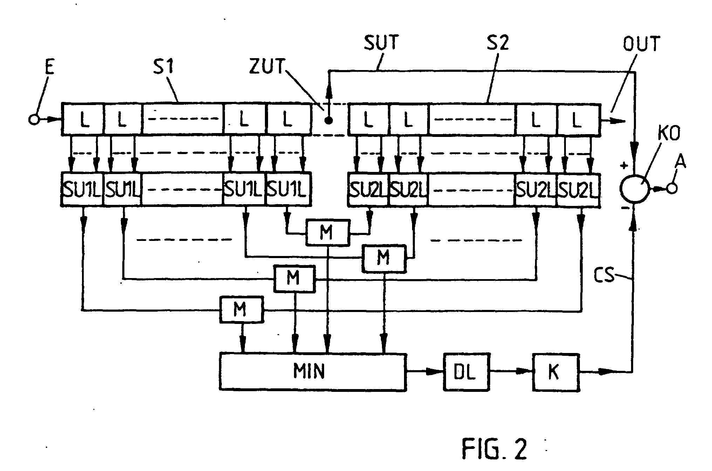

FIG. 1, FIG. 2, Blockbilder zur Erläuterung der Ausführungsbeispiele.

In dem Beispiel entsprechend FIG. 1 sind die Teilregister S1, S2 in Speicherblöcke L unterteilt. Dabei hat jedes Teilregister S1, S2 dieselbe Anzahl von Speicherblöcken. Jeder Speicherblock L enthält eine vorgebbare Anzahl von Speicherzellen. Vorzugsweise haben alle Speicherblöcke jeweils dieselbe Anzahl von Speicherzellen, die Speicherblöcke sind also gleich groß (lang). Jedem Speicherblock L ist nun ein Summmierglied SU1L, SU2L zugeordnet. In diesen werden jeweils die in den Speicherzellen eines Speicherblocks L enthaltenen Abtastwerte aufsummiert (addiert). Es entstehen sogenannte Blocksummen. Diese werden nun paarweise miteinander verglichen im zugehörigen Maximumdetektor M. Bei diesem Vergleich wird in dem Maximumdetektor M die jeweils größere Blocksumme ermittelt und diese an einen Minimumdetektor MIN weitergeleitet.

Bei diesem paarweisen Vergleich der Blocksummen werden, wie dargestellt, aus den Teilregistern S1, S2 immer die jeweils gleichen Speicherblöcke ausgewählt und von deren Blocksummen die jeweils größere (Maximum) in dem zugehörigen Maximumdetektor M ermittelt. Es wird also die erste Blocksumme (dem Eingang E benachbart) des ersten Teilregisters S1 mit der ersten Blocksumme (der Zelle unter Test ZUT benachbart) des zweiten Teilregisters S2 verglichen. Die zweite Blocksumme des ersten Teilregisters S1 wird mit der zweiten Blocksumme des zweiten Teilregisters S2 verglichen, und so weiter. Das heißt, die letzte Blocksumme (der Zelle unter Test ZUT benachbart) des ersten Teilregisters S1 wird mit der letzten Blocksumme des zweiten Teilregisters S2 verglichen. Dieser Vergleich erfolgt vorzugsweise, aber nicht notwendig, gleichzeitig. Die Anzahl der in den Maximumdetektoren M entstehenden Maximalwerte ist gleich der Hälfte der Anzahl der Speicherblöcke L.

In dem Minimumdetektor MIN wird nun aus allen Maximalwerten der kleinste Maximalwert (Minimum) ausgewählt und an eine Teilerschaltung DL weitergeleitet. Dort erfolgt eine Division des Minimums durch die Anzahl der in einem Speicherblock L enthaltenen Speicherzellen oder einem diesen zugeordneten vorgebbaren Wert. Das Ergebnis wird an den Multiplikator K weitergeleitet und dort mit einem vorgebbaren Multiplikator k multipliziert, so daß die Clutter-Schwelle CS entsteht. In dem Komparator KO wird dann das aus der Zelle unter Test ZUT stammende Signal unter Test SUT mit der Clutter-Schwelle verglichen. Am Ausgang A des Komparators KO werden lediglich diejenigen Abtastwerte ausgegeben, die größer als die Clutter-Schwelle CS sind.

Das Ausführungsbeispiel entsprechend Fig. 2 unterscheidet sich von demjenigen entsprechend FIG. 1 lediglich durch eine alternativ mögliche Schaltung der Maximumdetektoren M. Entsprechend Fig. 2 wird das Maximum aus der ersten Blocksumme des ersten Teilregisters S1 sowie der letzten Blocksumme des zweiten Teilregisters S2 gebildet. Weiterhin das Maximum aus der zweiten Blocksumme des ersten Teilregisters S1 sowie der zweitletzten (vorletzten) Blocksumme des zweiten Teilregisters S2, und so weiter.

Das heißt, das Maximum aus der zweitletzten Blocksumme des ersten Teilregisters S1 sowie der zweiten Blocksumme des zweiten Teilregisters S2. Und schließlich das Maximum aus der letzten Blocksumme des ersten Teilregisters S1 sowie der ersten Blocksumme des zweiten Teilregisters S2. Die derart ermittelten Maximalwerte werden, entsprechend FIG. 1, dem Minimumdetektor MIN zugeführt und wie beschrieben verarbeitet.

Das beschriebene Verfahren ist vorteilhafterweise sehr flexibel, das heißt, in einem weiten Bereich an die vorhandene Clutter-Situation (Clutter-Art) anpaßbar. Denn in jedem Teilregister ist die Anzahl der Speicherblöcke L entsprechend vorgebbar. Außerdem ist die in jedem Speicherblock L enthaltende Anzahl von Speicherzellen vorgebbar und damit die Gesamtanzahl der in jedem Teilregister S1, S2 vorhandenen Speicherzellen.

Bei dem Verfahren entsteht eine Clutter-Schwelle CS, die vorteilhafterweise allen in einem Videosignal möglichen Clutter-Sprüngen, beispielsweise von einem wolkenlosen Himmel zu einer Regenfront, verzögerungsfrei folgt, und zwar unabhängig von der Bandbreite, beispielsweise 20 MHz, der derzeit verwendeten Videosignale.

Aus der bisherigen Beschreibung ergibt sich, daß bei einer CFAR-Anordnung nach dem Stand der Technik (FIG. 3, FIG. 4) nach der Bildung eines Schwellwertes CS ein in einer Speicherzelle gespeicherter Abtastwert das CFAR-Fenster an der Stelle OUT (FIG. 3, FIG. 4) verläßt. Dafür rückt am Eingang E ein neuer Abtastwert in das CFAR-Fenster nach. Für die nun vorliegende Speicherzellen-Besetzung des CFAR-Fensters wird ein neuer Schwellwert CS ermittelt, und so weiter.

Dagegen wird bei den CFAR-Anordnungen entsprechend der Erfindung (FIG. 1, FIG. 2) in vorteilhafter Weise ein erheblich verringerter Realisierungsaufwand benötigt. Denn von einer Schwellwert-Berechnung zur nächsten verläßt immer ein ganzer Block von Abtastwerten das CFAR-Fenster an der Stelle OUT (Fig. 2). Dafür rückt am Eingang E immer ein ganzer Block neuer Abtastwerte in das CFAR-Fenster nach. Das heißt, die Ermittlung des Schwellwertes CS erfolgt immer blockweise und der Schwellwert CS wird für die Anzahl der Abtastwerte (Speicherzellen) innerhalb eines Speicherblockes L konstant gehalten. Dieser scheinbare Nachteil bewirkt jedoch dann keinen wenig Clutter-adaptiven CFAR-Schwellwert, wenn die Anzahl der zu einem Speicherblock L gehörenden Speicherzellen nicht zu groß gewählt wird. Das heißt, es muß eine Anpassung der Größe (Anzahl der Speicherzellen) eines Speicherblockes L an die zu erwartende Cluttersituation erfolgen. Diese Anpassung kann beispielsweise experimentell durchgeführt werden.

Die Erfindung ist nicht auf die beschriebenen Beispiele beschränkt, sondern sinngemäß auf weitere anwendbar. Beispielsweise sind die Teilerstufe DL sowie der Multiplikator K zu einer Multiplizierstufe zusammenfaßbar, denn es ist aus mathematischen Gründen lediglich eine Änderung des Multiplikators K erforderlich.

## Patentansprüche

1. Verfahren zur Erzeugung einer Clutter-Schwelle mittels einer CFAR-Anordnung, wobei
- die zu einem digitalisierten Videosignal gehörenden digitalen Abtastwerte zeitlich fortlaufend in ein Schieberegister, das zumindest zwei Teilregister enthält, eingelesen werden,
- zwischen den Teilregistern eine Zelle unter Test vorhanden ist, aus der ein Signal unter Test ausgekoppelt und einem Eingang eines Komparators zugeführt wird,
- die Anzahl der in den Teilregistern enthaltenen Speicherzellen an die Art und Größe des zu überwachenden Gebietes angepaßt wird,
- aus den in den Teilregistern gespeicherten Abtastwerten eine Clutter-Schwelle gebildet und diese einem zweiten Eingang des Komparators zugeführt wird und
- an dem Ausgang des Komparators lediglich die Signale unter Test, die größer als die Clutter-Schwelle sind, ausgegeben werden, **dadurch gekennzeichnet,**
- **daß** jedes Teilregister (S1, S2) in eine vorgebbare Anzahl von Speicherblöcken (L) unterteilt wird,
- **daß** in jedem Teilregister (S1, S2) eine gleich große Anzahl von Speicherblöcken (L) erzeugt wird,
- **daß** jeder Speicherblock (L) eine vorgebbare Anzahl von Speicherzellen enthält,
- **daß** jedem Speicherblock (L) ein Summierglied (SU1L, SU2L) zugeordnet wird, in welchem eine Aufsummierung aller in einem Speicherblock gespeicherten Abtastwerte erfolgt, so daß zu den Speicherblöcken gehörende Blocksummen entstehen,
- **daß** die jedem Teilregister (S1, S2) zuzuordnenden Blocksummen paarweise verglichen werden, derart, daß nach einem vorgebbaren Schema aus jedem Teilregister (S1, S2) jeweils eine Blocksumme ausgewählt wird,
- **daß** bei dem paarweisen Vergleich die jeweils größere Blocksumme ermittelt und an einen Minimumdetektor (MIN) weitergeleitet wird,
- **daß** in dem Minimumdetektor (MIN) aus allen größeren Blocksummen die kleinste Blocksumme (Miniumum) ausgewählt wird und
- **daß** die kleinste Blocksumme entsprechend der Anzahl der in einem Speicherblock (L) enthaltenen Speicherzellen sowie einem vorgebbaren Multiplikator (K) gewichtet und dann als Clutter-Schwelle (CS) ausgegeben wird.

2. Verfahren nach Anspruch 1, **dadurch gekennzeichnet, daß** jeder Speicherblock (L) dieselbe vorgebbare Anzahl von Speicherzellen enthält.

3. Verfahren nach Anspruch 1 oder Anspruch 2, **dadurch gekennzeichnet, daß** die in den Teilregistern (S1, S2) enthaltenen Speicherblöcke (L) gleichsinnig durchnumeriert werden und daß bei dem paarweisen Vergleich der Blocksummen immer Speicherblöcke (L) mit gleichen Nummern ausgewählt werden.

4. Anordnung zur Durchführung des Verfahrens nach einem der vorhergehenden Ansprüche, **dadurch gekennzeichnet,**
- **daß** jedes Teilregister (S1, S2) in eine vorgebbare Anzahl von Speicherblöcken (L) unterteilt ist, wobei in den Teilregistern (S1, S2) dieselbe Anzahl von Speicherblöcken (L) vorhanden ist,
- **daß** jedem Speicherblock (L) ein Summierglied (SU1L, SU2L) zugeordnet ist zur Aufsummierung der in dem Speicherblock (L) vorhandenen Abtastwerte,
- **daß** die Speicherblöcke (L), und damit die Summierglieder (SU1L, SU2L), der Teilregister gleichsinnig durchnumeriert sind,
- **daß** die Ausgänge von Summiergliedern (SU1L, SU2L) mit jeweils gleicher Nummer an jeweils einen Maximumdetektor (M) zugeführt sind, zur Ermittlung der jeweils größeren Blocksumme,
- **daß** die Ausgänge aller Maximumdetektoren (M) an einen Minimumdetektor (MIN) angeschlossen sind zur Ermittlung der kleinsten Blocksumme,
- **daß** die kleinste Blocksumme nach einer Wichtung entsprechend der in einem Speicherblock (L) enthaltenen Anzahl von Speicherzellen sowie einen vorgebbaren Multiplikator (K) als Clutter-Schwelle (CS) einem Eingang (-) eines Komparators (KO) anliegt und
- **daß** der andere Eingang (+) des Komparators (KO) mit einer Zelle unter Test (ZUT) gekoppelt ist.

## Claims

1. Method for producing a clutter threshold by means of a CFAR arrangement, in which
- the digital sample values which are associated with a digitized video signal are read successively in time into a shift register which contains at least two register elements,
- a cell under test is provided between the register elements, from which a signal under test is output and is supplied to an input of a comparator,
- the number of memory cells contained in the register elements is matched to the nature and size of the area to be monitored,
- a clutter threshold is formed from the sample values stored in the register elements and is supplied to a second input of the comparator, and
- only those signals under test which are greater than the clutter threshold are output at the output of the comparator, **characterized**
- **in that** each register element (S1, S2) is subdivided into a number of memory blocks (L) which can be predetermined,
- **in that** the same number of memory blocks (L) are produced in each register element (S1, S2),
- **in that** each memory block (L) contains a number of memory cells which can be predetermined,
- **in that** each memory block (L) has an associated addition element (SU1L, SU2L) in which all the sample values stored in one memory block are added up, thus resulting in block sums which are associated with the memory blocks,
- **in that** the block sums which can be associated with each register element (S1, S2) are compared in pairs such that one block sum is in each case selected from each register element (S1, S2) in accordance with a scheme which can be predetermined,
- **in that**, during the comparison in pairs, the respectively greater block sum is determined and is passed to a minimum detector (MIN),
- in that the smallest block sum (minimum) of all the greater block sums is selected in the minimum detector (MIN), and
- **in that** the smallest block sum is weighted as a function of the number of memory cells contained in one memory block (L) and as a function of a multiplier (K) which can be predetermined, and is then output as- the clutter threshold (CS).

2. Method according to Claim 1, **characterized in that** each memory block (L) contains the same number of memory cells which can be predetermined.

3. Method according to Claim 1 or Claim 2, **characterized in that** the memory blocks (L) contained in the register elements (S1, S2) are successively numbered in the same sense, and **in that** memory blocks (L) with the same numbers are always selected for the comparison of the block sums in pairs.

4. Arrangement for carrying out the method according to one of the preceding claims, **characterized**
- **in that** each register element (S1, S2) is subdivided into a number of memory blocks (L) which can be predetermined, with the register elements (S1 S2) having the same number of memory blocks (L),
- **in that** each memory block (L) has an associated addition element (SU1L, SU2L) for adding up the sample values in the memory block (L),
- **in that** the memory blocks (L) and hence the addition elements (SU1L, SU2L) are successively numbered in the same sense as the register elements,
- **in that** the outputs of addition elements (SU1L, SU2L) which each have the same number are supplied to in each case a maximum detector (M) in order to determine the respectively greater block sum,
- **in that** the outputs of all the maximum detectors (M) are connected to a minimum detector (MIN) in order to determine the smallest block sum,
- **in that**, after being weighted as a function of the number of memory cells contained in a memory block (L) and in accordance with a multiplier (K), the smallest block sum is applied as the clutter threshold (CS) to one input (-) of a comparator (KO), and
- **in that** the other input (+) of the comparator (KO) is coupled to a cell under test (ZVT).

## Revendications

1. Procédé pour la création d'un seuil d'échos parasites au moyen d'un agencement à CFAR ("Constant False Alarm Rate" - taux constant de fausse alarme), dans lequel:
- les valeurs numériques d'échantillonnage appartenant à un signal vidéo numérisé sont lues chronologiquement en continu dans un registre à décalage qui contient au moins deux parties de registre,
- une cellule testée de laquelle un signal testé est découplé et est apporté à l'entrée d'un comparateur est prévue entre les parties de registre,
- le nombre des cellules de mémoire contenues dans les parties de registre est adapté à la nature et à la taille de la zone à surveiller,
- un seuil d'échos parasites est formé à partir des valeurs d'échantillonnage conservées dans les parties de registre et est apporté à une deuxième entrée du comparateur, et
- seuls les signaux testés qui sont supérieurs au seuil d'échos parasites étant délivrés à la sortie du comparateur,
**caractérisé en ce que**
- chaque partie de registre (S1, S2) est divisée en un nombre prédéterminable de blocs de mémoire (L),
- un nombre égal de blocs de mémoire (L) est créé dans chaque partie de registre (S1, S2),
- chaque bloc de mémoire (L) contient un nombre prédéterminable de cellules de mémoire,
- un organe d'addition (SU1L, SU2L) dans lequel s'effectue une addition de toutes les valeurs d'échantillonnage conservées dans un bloc de mémoire est associé à chaque bloc de mémoire (L) de manière à obtenir des sommes de blocs appartenant aux blocs de mémoire,
- les sommes de blocs qui doivent être associées à chaque partie de registre (S1, S2) sont comparées par paires de telle sorte qu'une somme de bloc est sélectionnée dans chaque partie de registre (S1, S2) respective en fonction d'un schéma prédéterminable,
- lors de chaque comparaison par paire, la somme de bloc la plus élevée est chaque fois déterminée et transférée à un détecteur de minimum (MIN),
- la plus petite somme de bloc (minimum) parmi toutes les plus grandes sommes de blocs est sélectionnée dans le détecteur de minimum (MIN) et
- la plus petite somme de bloc est pondérée en fonction du nombre des cellules de mémoire contenues dans un bloc de mémoire (L) et d'un multiplicateur (K) prédéterminable et est ensuite délivrée comme seuil d'échos parasites (CS).

2. Procédé selon la revendication 1, **caractérisé en ce que** chaque bloc de mémoire (L) contient le même nombre prédéterminable de cellules de mémoire.

3. Procédé selon la revendication 1 ou la revendication 2, **caractérisé en ce que** les blocs de mémoire (L) contenus dans les parties de registre (S1, S2) sont numérotés dans le même sens et **en ce que**, lors de la comparaison par paire entre les sommes de blocs, ce sont toujours des blocs de mémoire (L) de même numéro qui sont sélectionnés.

4. Agencement en vue de la mise en oeuvre du procédé selon l'une des revendications précédentes, **caractérisé en ce que**:
- chaque partie de registre (S1, S2) est divisée en un nombre prédéterminable de blocs de mémoire (L), les parties de registre (S1, S2) contenant le même nombre de blocs de mémoire (L),
- un organe d'addition (SU1L, SU2L) pour effectuer une addition des valeurs d'échantillonnage conservées dans le bloc de mémoire (L) est associé à chaque bloc de mémoire (L),
- les blocs de mémoire (L) et donc les organes d'addition (SU1L, SU2L) des parties de registre sont numérotés dans le même sens,
- les sorties des organes d'addition (SU1L, SU2L) qui présentent à chaque fois le même numéro sont à chaque fois apportées à un détecteur de maximum (M) pour déterminer à chaque fois la somme de bloc la plus élevée,
- les sorties de tous les détecteurs de maximum (M) sont raccordées à un détecteur de minimum (MIN) pour déterminer la plus petite somme de bloc,
- après une pondération en fonction du nombre des cellules de mémoire contenues dans un bloc de mémoire (L) et d'un multiplicateur (K) prédéterminable, la plus petite somme de bloc est appliquée comme seuil d'échos parasites (CS) à une entrée (-) d'un comparateur (KO) et
- l'autre entrée (+) du comparateur (KO) est couplée à une cellule testée (ZUT).
